# EUROPEAN PATENT APPLICATION

(11) **EP 4 120 535 A1**
(43) Date of publication of application: **18.01.2023**
(21) Application number: 22184100.0
(22) Date of filing: 11.07.2022
(51) Int. Cl.: H02M 3/158, H02M 1/10

(54) **POWER-SUPPLY APPARATUS**

(30) Priority: 12.07.2021 JP 2021115242
(71) Applicant: Yazaki Corporation, Minato-ku Tokyo 108-8333 (JP)
(72) Inventor: Masui, Hideaki, Makinohara-shi, Shizuoka (JP)
(74) Representative: Grünecker Patent- und Rechtsanwälte PartG mbB

(57) **Abstract**

A DC/DC converter includes a semiconductor switch S1 and is configured to convert an input voltage by turning on and off the semiconductor switch S1. A semiconductor switch S2 is connected between a main power supply and input of the DC/DC converter. A semiconductor switch S3 is connected between a connection point between the semiconductor switch S2 and the input of the DC/DC converter and the backup power supply. A control unit turns on the semiconductor switch S2 and the semiconductor switch S3 in a normal state, and turns off the semiconductor switch S2 and turns on the semiconductor switch S3 when an abnormality occurs in the main power supply.

## Description

### TECHNICAL FIELD

The present invention relates to a power-supply apparatus.

### BACKGROUND ART

It has been proposed to mount a high-capacity electric double-layer capacitor (EDLC) on an automobile in response to demands for downsizing of an automobile battery, improvement of the number of times of endurance, life, and instantaneous load current supply (Patent Literature 1). The EDLC is used as a backup power supply, or is used, similarly to a normal battery, as a drive source for an electric motor or a starter motor, and for recovery of regenerative energy.

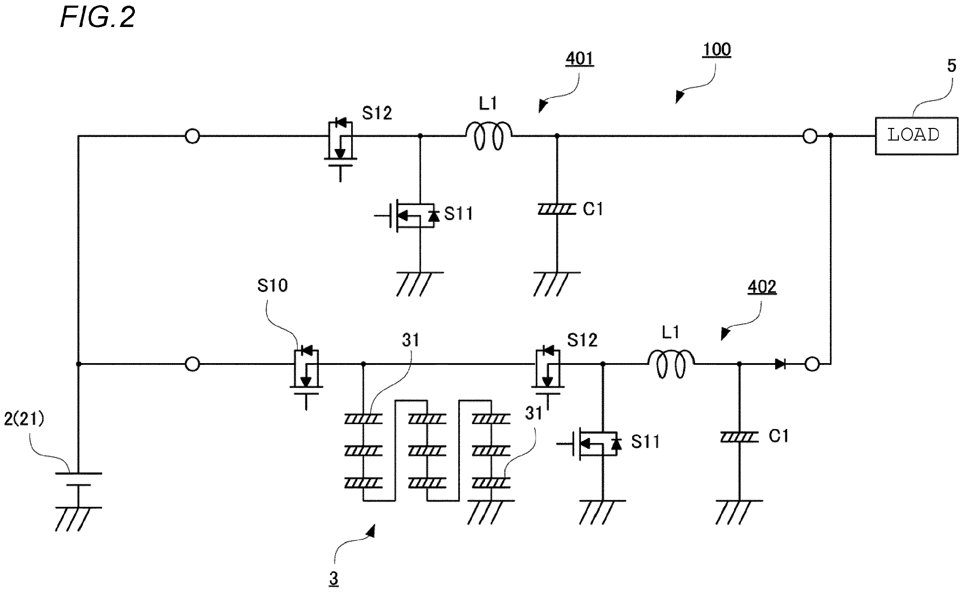

As an example in which the EDLC described above is used as a backup power supply, a power-supply apparatus shown in Fig. 2 is considered. As shown in the figure, a power-supply apparatus 100 is provided with DC/DC converters 401 and 402 corresponding to a main power supply 2 having a battery 21 and a backup power supply 3 having an EDLC 31, respectively. In addition, a switch S10 is provided between the main power supply 2 and the backup power supply 3. Each of the DC/DC converters 401 and 402 includes a choke coil L1, a smoothing capacitor C1, a switch S11 connected in parallel to the smoothing capacitor C1, and a switch S12 connected between the choke coil L1 and input.

During a normal operation, the switch S12 of the DC/DC converter 401 and the switch S10 are turned on, and the switch S12 of the DC/DC converter 402 is turned off. In addition, the DC/DC converter 401 provided corresponding to the main power supply 2 is operated to supply power from the main power supply 2 to a load 5. In addition, an operation of the DC/DC converter 402 provided corresponding to the backup power supply 3 is stopped. Since the switch S10 is turned on, power is supplied from the main power supply 2 to the backup power supply 3, and the backup power supply 3 is charged.

On the other hand, when an abnormality occurs in the main power supply 2, the switch S12 of the DC/DC converter 401 and the switch S10 are turned off, and the switch S12 of the DC/DC converter 402 is turned on. In addition, the DC/DC converter 402 provided corresponding to the backup power supply 3 is operated to supply power from the backup power supply 3 to the load 5. In addition, an operation of the DC/DC converter 401 provided corresponding to the main power supply 2 is stopped. Since the switch S10 is turned off, power supply from the main power supply 2 to the backup power supply 3 is cut off.

### CITATION LIST

### PATENT LITERATURE

Patent Literature 1: JP-A-2021-23093

### SUMMARY OF INVENTION

In a comparative example shown in Fig. 2 described above, since it is necessary to provide the DC/DC converters 401 and 402 for each of the main power supply 2 and the backup power supply 3, the number of components increases. Therefore, when a backup request increases, there is a problem that a functional size increases due to an increase in components and an increase in a current capacity.

The present invention has been made in view of the above circumstances, and an object of the present invention is to provide a power-supply apparatus that is reduced in size by reducing the number of components.

In order to achieve the above object, a power-supply apparatus according to the present invention includes a DC/DC converter including a first switch and configured to convert an input voltage by turning on and off the first switch, a second switch connected between a main power supply and input of the DC/DC converter, and a third switch connected between a connection point between the second switch and the input of the DC/DC converter and a backup power supply.

The present invention has been briefly described above. Further, details of the present invention will be clarified by reading a mode (hereinafter, referred to as an "embodiment") for carrying out the invention to be described below with reference to the accompanying drawings.

### BRIEF DESCRIPTION OF DRAWINGS

Fig. 1 is a block diagram showing an embodiment of a power supply system incorporating a power-supply apparatus according to the present invention.
Fig. 2 is a block diagram showing an example of a power supply system according to a comparative example.

### DESCRIPTION OF EMBODIMENTS

A specific embodiment according to the present invention will be described below with reference to drawings.

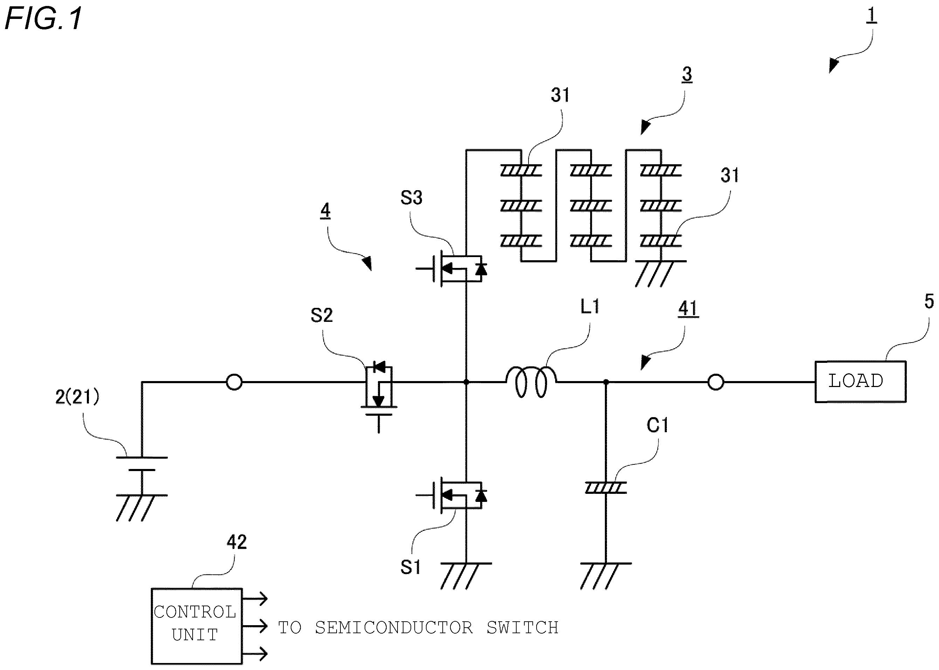

A power supply system 1 incorporating a power-supply apparatus according to the present invention is mounted on an automobile. As shown in Fig. 1, the power supply system 1 includes a main power supply 2, a backup power supply 3, a power-supply apparatus 4 that boosts (converts) an input voltage that is a power supply voltage supplied from the main power supply 2 or the backup power supply 3, and a load 5 to which power is supplied from the power-supply apparatus 4.

The main power supply 2 includes a battery 21. In a normal state, power is supplied from the main power supply 2 to the load 5 and the backup power supply 3. The backup power supply 3 includes a plurality of electric double-layer capacitors (EDLC) 31 connected in series. When an abnormality occurs in the main power supply 2, power is supplied from the backup power supply 3 to the load 5.

The power-supply apparatus 4 includes a direct current (DC)/direct current (DC) converter 41, a semiconductor switch S2 as a second switch, a semiconductor switch S3 as a third switch, and a control unit 42.

The DC/DC converter 41 boosts the power supply voltage (input voltage) supplied from the main power supply 2 or the backup power supply 3 and supplies the boosted power supply voltage to the load 5. The DC/DC converter 41 includes a choke coil L1 connected between input and output, a smoothing capacitor C1 provided between an output side of the choke coil L1 and the ground, and a semiconductor switch S1 as a first switch provided between an input side of the choke coil L1 and the ground.

The semiconductor switch S1 of the present embodiment includes an N-channel field effect transistor (FET), and has a drain connected to the input side of the choke coil L1 and a source connected to the ground. The semiconductor switch S1 converts the input voltage by turning on and off. More specifically, when the semiconductor switch S1 is turned on, magnetic energy is accumulated in the choke coil L1, and when the semiconductor switch S1 is turned off, input energy and the magnetic energy accumulated in the choke coil L1 are supplied to the output side, so that an output voltage higher than the input voltage can be output.

The semiconductor switch S2 is connected between the main power supply 2 and input of the DC/DC converter 41. More specifically, the semiconductor switch S2 includes an N-channel FET, and has a drain connected to the main power supply 2 and a source connected to the choke coil L1.

The semiconductor switch S3 is connected between a connection point between the semiconductor switch S2 and the input of the DC/DC converter 41 and the backup power supply 3. More specifically, the semiconductor switch S3 includes an N-channel FET, and has a drain connected to the backup power supply 3 and a source connected to the choke coil L1.

The control unit 42 is connected to gates of the semiconductor switches S1 to S3 and controls ON/OFF of the semiconductor switches S1 to S3. The control unit 42 includes, for example, a microcomputer and a PWM control unit. The microcomputer includes a memory that stores a program and a central processing unit (CPU) that operates in accordance with the program. The PWM control unit detects an output current to the load 5, and outputs a PWM signal having a duty so that the detected output current becomes a reference level.

Next, an operation of the power supply system 1 having the above-described configuration will be described. In the normal state, the control unit 42 turns on the semiconductor switches S2 and S3. Accordingly, the power supply voltage from the main power supply 2 is supplied as the input voltage of the DC/DC converter 41. In addition, the backup power supply 3 is charged by the main power supply 2. In addition, the control unit 42 inputs the PWM signal from the PWM control unit to the gate of the semiconductor switch S1, and converts the power supply voltage of the main power supply 2 so that an output current becomes the reference level.

On the other hand, when an abnormality occurs in the main power supply 2, the control unit 42 turns off the semiconductor switch S2 and turns on the semiconductor switch S3. Accordingly, the power supply from the main power supply 2 to the DC/DC converter 41 or the backup power supply 3 is cut off. In addition, the control unit 42 inputs the PWM signal from the PWM control unit to the gate of the semiconductor switch S1, and converts the power supply voltage of the backup power supply 3 so that an output current becomes the reference level.

According to the above-described embodiment, the DC/DC converter 41 converts the main power supply 2 in the normal state, and when the main power supply 2 is abnormal, the DC/DC converter 41 converts the backup power supply 3. Accordingly, the DC/DC converter 41 can be shared by the main power supply 2 and the backup power supply 3, the number of components can be reduced, and a size can be reduced.

The present invention is not limited to the above embodiment, and modifications, improvements, and the like can be made as appropriate. Additionally, materials, shapes, sizes, numbers, arrangement positions, or the like of constituent elements in the above-described embodiment are optional and are not limited as long as the present invention can be achieved.

In the above-described embodiment, the backup power supply 3 includes the EDLC 31, but the present invention is not limited thereto. The backup power supply 31 may include a battery.

In addition, in the above-described embodiment, a step-up DC/DC converter is used as the DC/DC converter 41, but the present invention is not limited thereto. A step-down DC/DC converter may be used as the DC/DC converter 41.

Here, characteristics of the embodiment of the power-supply apparatus according to the present invention described above are summarized briefly in the following [1] to [3].
[1] A power-supply apparatus (4) including:
   a DC/DC converter (41) including a first switch (S1) and configured to convert an input voltage by turning on and off the first switch (S1);
   a second switch (S2) connected between a main power supply (2) and input of the DC/DC converter (41); and
   a third switch (S3) connected between a connection point between the second switch (S2) and the input of the DC/DC converter (41) and a backup power supply (3).

According to a configuration of the above [1], the DC/DC converter (41) converts the main power supply (2) in a normal state, and when the main power supply (2) is abnormal, the DC/DC converter (41) converts the backup power supply (3). Accordingly, the DC/DC converter (41) can be shared by the main power supply (2) and the backup power supply (3), the number of components can be reduced, and a size can be reduced.

[2] The power-supply apparatus (4) according to [1], in which
the main power supply (2) includes a battery (21), and
the backup power supply (3) includes an electric double-layer capacitor (31).

According to a configuration of the above [2], the DC/DC converter (41) can be shared by the battery (21) and the electric double-layer capacitor (31).

[3] The power-supply apparatus (4) according to [1] or [2], further including:
a control unit (42) that turns on the second switch (S2) and the third switch (S3) in a normal state, and turns off the second switch (S2) and turns on the third switch (S3) when an abnormality occurs in the main power supply.

According to a configuration of the above [3], the control unit (42) can control the second switch (S2) and the third switch (S3) so that the DC/DC converter (41) converts the main power supply (2) in the normal state, and when the main power supply (2) is abnormal, the DC/DC converter (41) converts the backup power supply (3).

According to the present invention, it is possible to provide a power-supply apparatus that is reduced in size by reducing the number of components.

## Claims

1. A power-supply apparatus (1) comprising:
a DC/DC converter (41) including a first switch (S1) and configured to convert an input voltage by turning on and off the first switch (S1);
a second switch (S2) connected between a main power supply (2) and input of the DC/DC converter (41); and
a third switch (S3) connected between a connection point between the second switch (S2) and the input of the DC/DC converter (41) and a backup power supply (3).

2. The power-supply apparatus (4) according to claim 1, wherein
the main power supply (2) includes a battery (21), and
the backup power supply (3) includes an electric double-layer capacitor (31).

3. The power-supply apparatus (4) according to claim 1 or 2, further comprising:
a control unit (42) configured to turn on the second switch (S2) and the third switch (S3) in a normal state, and turn off the second switch (S2) and turn on the third switch (S3) when an abnormality occurs in the main power supply.
